(19) **Europäisches Patentamt**

**European Patent Office**

**Office européen des brevets**

(11) **EP 0 800 730 B1**

(12) **FASCICULE DE BREVET EUROPEEN**

(45) Date de publication et mention
de la délivrance du brevet:
**04.02.2004 Bulletin 2004/06**

(51) Int Cl.⁷: **H04J 3/16**, H04H 1/00,
H04L 27/26

(21) Numéro de dépôt: **95941125.7**

(22) Date de dépôt: **22.11.1995**

(86) Numéro de dépôt international:
**PCT/FR1995/001538**

(87) Numéro de publication internationale:
**WO 1996/021293 (11.07.1996 Gazette 1996/31)**

(54) **PROCEDE DE RECONFIGURATION DYNAMIQUE D'UN SIGNAL PRESENTANT UN ENTRELACEMENT TEMPOREL, RECEPTEUR ET SIGNAL CORRESPONDANTS**

VERFAHREN ZUR DYNAMISCHEN REKONFIGURIERUNG EINES SIGNALES, DAS EINE ZEITLICHE VERSCHACHTELUNGDARSTELLT, ZUGEHÖRIGER EMPFÄNGER UND SIGNAL

METHOD FOR THE DYNAMIC RECONFIGURATION OF A TIME-INTERLEAVED SIGNAL, AND CORRESPONDING RECEIVER AND SIGNAL

(84) Etats contractants désignés:
**CH DE GB IT LI NL SE**

(30) Priorité: **30.12.1994 FR 9416034**

(43) Date de publication de la demande:
**15.10.1997 Bulletin 1997/42**

(73) Titulaires:
• **FRANCE TELECOM**
 **75015 Paris (FR)**
• **TELEDIFFUSION DE FRANCE**
 **75932 Paris Cédex 15 (FR)**

(72) Inventeurs:
• **RAULT, Jean-Christophe**
 **F-35000 Rennes (FR)**
• **BAUDUIN, Jean-Pierre**
 **F-35270 Combourg (FR)**

• **LEMESLE, Jean-Michel**
 **F-35700 Rennes (FR)**

(74) Mandataire: **Vidon, Patrice**
 **Cabinet Vidon**
 **16 B, rue Jouanet - B.P. 90333**
 **Technopole Atalante**
 **35703 Rennes Cedex 7 (FR)**

(56) Documents cités:
**EP-A- 0 208 604          WO-A-82/02465**
**US-A- 3 982 077**

• **EBU TECHNICAL REVIEW, SPRING 1994, SWITZERLAND, no. 259, ISSN 0251-0936, pages 11-23, RILEY J L 'The DAB multiplex and system support features'**

**Description**

Le domaine de l'invention est celui de la transmission de signaux numériques (ou de signaux analogiques échantillonnés et numérisés) vers un ou plusieurs récepteurs. Plus précisément, l'invention s'applique aux systèmes de transmission permettant la transmission d'un multiplex formé généralement (mais pas exclusivement) de plusieurs signaux source indépendants, selon une structure de multiplex redéfinissable en fonction des besoins, et mettant en oeuvre un entrelacement temporel des éléments de données formant ces signaux-source.

Un domaine particulier de l'invention est la transmission de signaux mettant en oeuvre simultanément une pluralité de fréquences porteuses codées chacune par des éléments de données numériques distincts.

De tels signaux sont généralement désignés par le terme FDM (Frequency Division Multiplex (multiplex de fréquences)). Un exemple particulier de ces signaux, auquel s'applique notamment l'invention, est les signaux OFDM (Orthogonal Frequency Division Multiplex (multiplexage de fréquences orthogonales)).

Un signal OFDM est par exemple utilisé dans le système de diffusion numérique décrit notamment dans le brevet français FR-86 09622 déposé le 2 juillet 1986 et dans le document "Principes de modulation et de codage canal en radiodiffusion numérique vers les mobiles" (M. Alard et R. Lassalle ; Revue de l'U.E.R, n° 224, août 1987, pp. 168-190), et connu sous le nom de système COFDM (Coded Orthogonal Frequency Division Multiplex (multiplexage de fréquences orthogonales codées)).

Ce système COFDM a notamment été développé dans le cadre du projet européen DAB (Digital Audio Broadcasting (diffusion audionumérique)). Il est également candidat à la normalisation pour la diffusion terrestre de la télévision numérique.

Les signaux transmis par de tels systèmes se présentent sous la forme de trames successives, chaque trame comprenant l'ensemble des fréquences porteuses. Plusieurs signaux source peuvent donc être transportés simultanément, chaque signal source étant par exemple, à un instant donné, associé à un jeu de fréquences. Par signal source, on entend bien-sûr aussi bien des signaux tout à fait indépendants, correspondant à diverses applications (sons, images, télématique, données,..) que des signaux distincts (ou flux) d'une même application (par exemple voies droite et gauche pour un signal stéréophonique, sous-titrage, traduction, images associés à un signal principal,etc..).

On comprend aisément qu'il est souhaitable que la structuration de la trame en canaux de données (correspondant à chaque signal source) soit modifiable en fonction des besoins. Par exemple, une station peut n'émettre qu'épisodiquement, et n'avoir donc besoin de ressources de transmission qu'à ses instants d'émission. Une application peut également voir ses besoins varier au cours du temps : transmission stéréophonique de la musique et monophonique de la parole, ajout d'un signal sonore de traduction, transmission d'une illustration etc... Un autre exemple est encore celui de la radiomessagerie, où les besoins varient en permanence. Plus généralement, l'administrateur du réseau peut souhaiter, pour quelque raison que ce soit, changer la structure des trames.

Une technique permettant de gérer la structuration en trames et sa reconfiguration est décrite dans le brevet FR-90 16383 du 19 décembre 1990, au nom des mêmes déposants et ayant pour titre "système de transmission de données par répartition dans l'espace temps-fréquence, avec structuration en canaux". Selon cette technique, au moins certaines trames comprennent, périodiquement, un descriptif de la structure courant. Ainsi, tout récepteur peut connaître cette structure, de façon à extraire le ou les signaux qui l'intéressent.

Cette technique a été introduite dans la norme DAB. Dans cette norme, la trame est divisée en sous-canaux. On conserve par la suite cette terminologie, sans que, bien sûr, elle soit limitative de l'invention. Il convient de noter que, au contraire l'invention peut s'appliquer à tout type de structuration. Notamment, il est possible de prévoir plusieurs niveaux de structuration. Notamment, il est possible de prévoir plusieurs niveaux de structuration (canaux, sous-canaux...), plusieurs types de sous-canaux (transparent et par paquets, par exemple), etc..

Un changement de structuration, ou reconfiguration de multiplex, peut être demandé à tout instant (la norme DAB prévoyant un délai minimum de 16 trames, pour des raisons expliquées par la suite), par exemple selon la technique décrite dans le document "The DAB multiplex and system support features" ("Les caractéristiques du multiplex DAB et du support système" ; "J.L. Riley ; EBU Technical Review, Printemps 1994, page 11-33). Un problème se présente cependant lors de chaque reconfiguration, du fait de l'entrelacement temporel.

Il n'est en effet pas possible de changer instantanément de structure. Il existe en régime transitoire de N trames, N étant la profondeur de l'entrelacement temporel. Plus précisément, si on considère les N trames de la phase transitoire suivant une décision de reconfiguration, on constate qu'elles devraient être partiellement construites selon la structuration précédente (éléments numériques entrelacés précédemment à la commande de reconfiguration) et partiellement selon la nouvelle structuration (éléments numériques entrelacés après la commande).

Ainsi, dans le cas du DAB, on sait que le procédé d'entrelacement temporel conduit à introduire un retard global de 15 trames (à 24 ms, soit 360ms). Ce retard est partagé entre l'émission (entrelacement) et la réception (désentrelacement).

En fait, un bit donné est retardé de p trames à l'émission, lors de l'entrelacement, et de (15-p) trames à la réception lors du désentrelacement. Le nombre p est déterminé par le rang du bit, modulo 16 dans le sous canal.

Pour introduire ces retards, on doit, pour chaque sous canal, mémoriser les bits de ce sous canal correspondant au 16 trames les plus récentes. La mémoire d'entrelacement contient donc tous les bits de l'ensemble des sous-canaux sur un horizon de 16 trames.

L'allocation mémoire retenue est identique à celle de la trame (dite trame CIF), mais avec une profondeur de 16 trames. Chaque sous-canal ayant un nombre entier d'unités de capacités de 64 bits (ou CU, pour le terme anglais "capacity unit"), il s'agit donc de partager la mémoire avec une granularité de 64 bits.

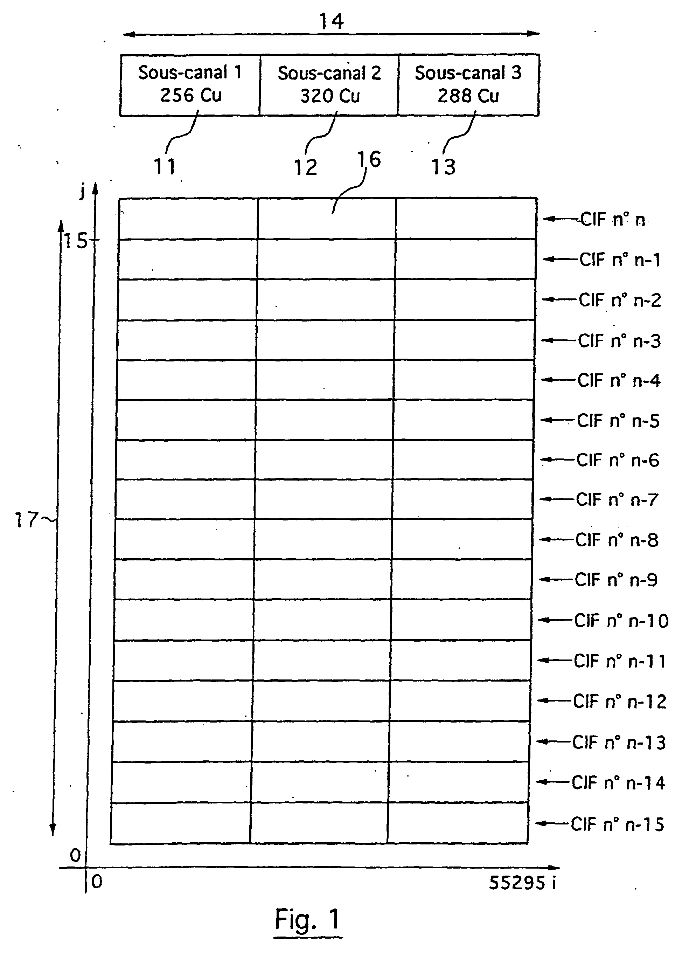

La figure 1 permet de se rendre compte de cette allocation mémoire pour un exemple à 3 sous-canaux 11, 12, 13. La structure de la trame 14 comprend 864 CU. Une case mémoire 16 du plan mémoire 17 peut donc être caractérisé par deux nombres que l'on peut appeler i et j (colonne, ligne).i correspond au rang du bit dans la trame et varie de 0 à 55295, j correspond à l'indice de la trame CIF et varie de 0 à 15.

Les bits d'un sous-canal sont écrits dans cette mémoire de façon à assurer l'entrelacement temporel.

Par exemple, dans le cas de la norme DAB, pour générer la trame CIF d'indice n, le bit de rang i dans le sous canal sera écrit dans la case caractérisée par i et j = f (i), donc dans la colonne de rang i, mais sur une ligne de rang "j" dépendant de i ou plutôt du reste de la division de i par 16 (une trame CIF étant caractérisée par 55296 bits écrits à la même ligne).

La table 1 donne la valeur de la ligne j en fonction du reste de la division de i par 16 et de l'indice n de la trame.

TABLE 1

| Reste de la division de i par 16 (i rang du bit dans la trame) | ligne où est écrit le bit de rang i (trame à laquelle appartient le bit de rang i) |
|---|---|
| 0 | r |
| 1 | r-8 |
| 2 | r-4 |
| 3 | r-12 |
| 4 | r-2 |
| 5 | r-10 |
| 6 | r-6 |
| 7 | r-14 |
| 8 | r-1 |
| 9 | r-9 |
| 10 | r-5 |
| 11 | r-13 |
| 12 | r-3 |
| 13 | r-11 |
| 14 | r-7 |
| 15 | r-15 |

La relecture du sous-canal se fait simplement en ligne (1ère ligne pour la trame d'indice r).

Au niveau de la fonction d'entrelacement temporel, la reconfiguration dynamique du multiplex signifie un changement d'allocation des sous-canaux dans le trame CIF.

Cela peut être un changement de la position d'un ou plusieurs sous-canaux dans la trame CIF, sans changement du débit. Cela peut être également un diminution du débit, donc du nombre de CU pour un sous canal ou au contraire une augmentation du débit. Ces 2 derniers événements provoquent également une modification de l'allocation des CU dans la trame CIF.

Ce changement est demandé par l'équipement de multiplexage et peut être interprété par une microprocesseur qui connaît, trame après trame, l'allocation des CU dans la trame CIF.

La norme DAB prévoit que, dans la trame CIF, le changement doit être instantané et qu'une CU soit toujours être composée de bits appartenant au même sous canal.

Si on effectue les opérations d'écriture/lecture comme décrit précédemment, cela signifie que dès le changement d'allocation, on va écrire et lire les bits du sous-canal à l'emplacement mémoire correspondant à la nouvelle allocation.

Après plus de 16 trames, cette mémoire ayant été complètement remplie par le sous-canal adéquat, la relecture de cette partie mémoire ne contiendra que des bits de ce même sous-canal, et par conséquent la fonction d'entrelacement sera complètement opérationnelle (on se retrouve en régime "établi", ou "normal").

Toutefois, pendant les 15 trames suivant le changement d'allocation, l'emplacement correspondant à la nouvelle allocation contient certes des bits du sous-canal nouvellement alloué à cette partie, mais également des bits appartenant au sous-canal anciennement alloué à cette partie de la mémoire conduit à former des CU contenant des bits de 2 sous-canaux différents. Le signal ainsi transmis n'est pas compatible avec la norme pendant cette transition de $15 \times 24$ ms $= 360$ ms, ce qui, pour résumer, est dû à l'inertie de la mémorisation des 15 trames précédentes.

Les N trames de la phase transitoire sont donc inhomogènes, et donc non décodables. Dans un décodeur, elles correspondront à un bruit, un parasite passager.

Pour limiter ce problème, on peut envisager, dès l'instruction de reconfiguration, de construire des trames selon la nouvelle structuration, c'est-à-dire avec des unités de capacité homogène (appartenant à un seul canal). Cette technique ne permet cependant pas de résoudre le problème puisque ces unités de capacité seraient incomplètes pendant la phase transitoire. De plus, cette technique conduit à une perte des derniers éléments de données entrelacés selon la structuration précédente.

Enfin, cette technique impose une gestion de mémoire complexe. Il serait en effet nécessaire d'écrire les éléments de données dans une zone mémoire libre. L'inconvénient de cette méthode est d'une part de nécessiter une quantité mémoire supérieure à $16 \times 55296$ bits, d'autre part de devoir gérer cette mémoire à la manière d'un disque dur d'ordinateur, en ayant en permanence une image de la mémoire occupée et de la mémoire disponible. Cette gestion mémoire peut devenir très complexe puisque dans le cas où par exemple un sous-canal doit augmenter son débit, le nombre de CU supplémentaires serait affecté à une zone mémoire non contiguë. Après plusieurs reconfigurations, incluant diverses augmentations et diminutions de débits, la mémoire d'entrelacement risque d'être découpée en un très grand nombre de blocs, alternativement libres et occupés.

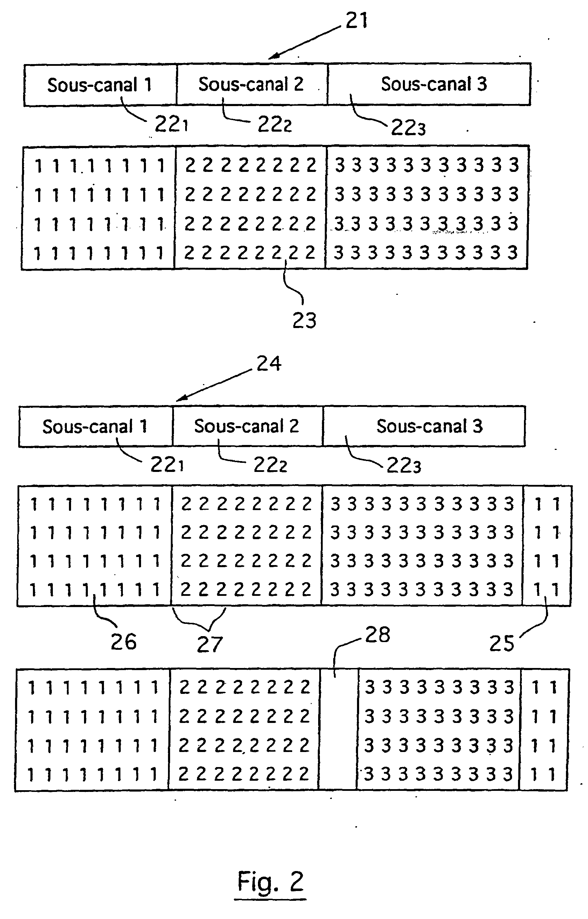

A titre d'exemple, la figure 2 montre comment une diminution d'un sous-canal et une augmentation d'un autre peut conduire à la nécessité d'avoir de la place mémoire supplémentaire, à créer des zones libres, et à partitionner la mémoire allouée à un sous-canal donné. La structure précédente 21 prévoit 3 sous-canaux $22_1$ à $22_3$, ce qui conduit à l'occupation correspondant du plan mémoire 23. Lors de la reconfiguration, la nouvelle structure 24 prévoit une augmentation du sous-canal $22_1$, le décalage en conséquence du sous-canal $22_2$ et la réduction du sous-canal $22_3$.

En conséquence, les données du sous-canal $22_1$, sont écrites à l'ancien emplacement prévu 26, mais également dans une nouvelle zone disponible 25, la zone 27 étant occupée par le sous-canal $22_2$. Lorsque le régime normal est à nouveau atteint, le plan mémoire présente une zone vide 28, puisque le sous-canal $22_3$ est réduit.

On voit donc la gestion de la mémoire peut rapidement devenir très complexe, l'allocation des sous-canaux dans la mémoire d'entrelacement étant complètement indépendante de l'allocation des sous-canaux dans la CIF. De plus un sous-canal peut être alloué à plusieurs blocs mémoires, à la manière d'un fichier sur un disque dur d'ordinateur.

Au bout d'un certain nombre de reconfigurations, il pourrait même être nécessaire de réinitialiser le processus afin de recompacter la mémoire d'entrelacement afin d'éviter de gérer un trop grand nombre de pointeurs, et cette réinitialisation impliquerait une interruption momentanée des programmes.

L'invention a notamment pour objectif de pallier ces différents inconvénients de l'état de la technique.

Plus précisément, un objectif de l'invention est de fournir un procédé de reconfiguration dynamique de la structure des trames d'un système de transmission, grâce auquel aucune perte de données ni aucune perturbation de la transmission n'apparaît, malgré la mise en oeuvre d'un entrelacement temporel.

En d'autre termes, l'invention a pour objectif de fournir un tel procédé, capable de gérer sans perte d'information la phase transitoire due à l'entrelacement, lorsqu'une reconfiguration est demandée.

Un autre objectif de l'invention est de fournir un tel procédé, ne nécessitant aucune augmentation de la capacité de mémorisation, ni à l'émission, ni à la réception. Plus précisément, un objectif de l'invention est de permettre la mise en oeuvre du procédé avec une capacité mémoire correspondant à la taille d'une trame à émettre multipliée par la profondeur de l'entrelacement.

Encore un autre objectif de l'invention est de limiter l'augmentation de la complexité due à la mise en oeuvre du procédé. Notamment, un objectif de l'invention est de fournir un tel procédé qui puisse être implanté par exemple sous la forme d'une logique simple peu consommatrice de transistors, dans les composants semi-conducteurs classiques assurant la réception d'un signal numérique.

Un autre objectif de l'invention est de fournir un tel procédé, capable d'accepter tout type de modification de la structuration (taille, nombre et emplacement des sous-canaux), sans aucune limitation, quel que soit le rythme de reconfiguration.

L'invention a également pour objectif de fournir un tel procédé, qui ne perturbe pas le fonctionnement des récepteurs ne l'incluant pas (en dehors, bien sûr, de la phase transitoire).

Un autre objectif de l'invention est de fournir des récepteurs capables de recevoir

Un autre objectif de l'invention est de fournir des récepteurs capables de recevoir et décoder les signaux produits par le procédé de l'invention, qui soient simples à mettre en oeuvre, et d'un coût de conception et de production restreint.

Ces objectifs, ainsi que d'autres qui apparaîtront par la suite, sont atteints à l'aide d'un procédé de reconfiguration dynamique de la structure des trames d'un signal, selon la revendication 1.

Ainsi selon l'invention, les trames du régime transitoire ne sont pas lues, ligne à ligne, de manière linéaire et selon un ordre d'indice d'adressage strictement croissant, dans la mémoire d'entrelacement. Au contraire, l'invention propose une approche tout à fait nouvelle, que l'homme du métier n'avait jamais envisagée, qui consiste à mettre en oeuvre une logique de relecture spécifique et adaptée.

En d'autres termes, lors du régime transitoire, chaque trame à une structure différente, ne correspondant, ni à la structure précédente, ni à la structure courante, et ne suivant plus exactement l'ordre d'entrelacement prédéfini, mais étant toutes formées d'unités de capacité homogènes. Progressivement, la structure des trames peut "glisser" de la structure précédente vers la structure courante.

De cette façon, dès lors qu'un récepteur connaît la logique de construction des trames, il lui est possible de reconstruire les signaux source sans perte.

On constate que la capacité mémoire est conservée, qu'aucune complexité n'est ajoutée pour l'inscription des éléments, et que le seul ajout par rapport à l'état de la technique est la mise en oeuvre d'une logique de relecture, qui peut être très simple.

Cette technique permet d'accepter tout type de reconfiguration, à tout instant, et même si une nouvelle reconfiguration est demandée alors qu'on se trouve en régime transitoire.

Avantageusement, ladite logique de relecture génère un signal de contrôle permettant la sélection d'une adresse de lecture pour chaque élément de données, parmi une première adresse correspondant à la structure précédente et une seconde adresse correspondant à la nouvelle structure.

Préférentiellement, lesdites unités de capacité sont constituées d'un nombre entier, supérieure ou égal à 1, de zones de données, chaque zone de données comprenant N éléments de données, et en ce que ledit entrelacement temporel est effectué indépendamment sur des blocs formés de N zones de données de N trames consécutives. de N lignes et de N colonnes, à calculer une adresse d'inscription dans ledit bloc à partir de l'adresse précédente en :

- ajoutant 1 modulo N à l'adresse de colonne, pour déterminer la nouvelle adresse de colonne ; et
- ajoutant l'adresse de colonne écrite selon la technique bit reverse à l'adresse de ligne modulo N, pour déterminer le nouvelle adresse de ligne.

Cela correspond notamment à la technique mis en oeuvre pour la norme DAB.

Ledit signal de contrôle est alors avantageusement un signal binaire représentant, pour chaque zone de données, le résultat de la comparaison entre :

- le nombre de trames transmises depuis la mise en oeuvre de la nouvelle structure de trame ; et
- la représentation selon la technique bit reverse du rang modulo N de l'élément de données en cours dans ladite zone de données.

Selon un mode de réalisation préférentiel, adapté au DAB, N est égal à 16, les éléments de données sont binaires, et
dans ledit régime transitoire, on gère cinq compteurs :

- un compteur de trame (cpt_trame) modulo 16 ;
- un compteur du nombre de trames écoulées depuis une instruction de reconfiguration (cpt_trame_ch), valant 0 en régime normal et comptant modulo 16 ;
- un compteur d'unités de capacité allouées selon la nouvelle structure, sur 10 bits (cpt_NCU) ;
- un compteur d'unités de capacité allouées selon la structure précédente, sur 10 bits (cpt_ACU) ;
- un compteur de rang de l'élément de donnée binaire dans l'unité de capacité, sur 6 bits (cpt_rang) ;

et un signal binaire de comparaison entre la valeur dudit compteur du nombre de trames écoulées depuis une instruction de reconfiguration (cpt_trame_ch) et des quatre bits de poids fort dudit compteur de rang (cpt_rang), lus selon la technique "bit reverse",
et on effectue pour chacun desdits sous-canaux des chacune des trames dudit régime transitoire les étapes suivantes :

- calcul des adresses des blocs dans ledit plan mémoire selon la structure précédente et selon la structure courante ;
- initialisation à 0 des compteurs cpt_NCU, cpt_ACU, cpt_rang ;

- pour chaque sous-canal :

  - inscription dans la mémoire des éléments de données binaires à inscrire aux adresses sur 20 bits dont :

    - les 6 bits de poids faible correspondent audit compteur de rang (cpt_rang) ;
    - les 10 bits de poids moyen correspondent audit compteur d'unités de capacité allouées selon la nouvelle structure (cpt_NCU) ;
    - les 4 bits de poids fort correspondent à la sommation dudit compteur de trames (cpt_trame) et des 4 bits de poids faible dudit compteur de rang (cpt_rang) lus selon la technique "bit reverse",

    ledit compteur de rang (cpt_rang) étant incrémenté à chaque élément de données ;
  - lecture dans la mémoire des éléments de données binaires à lire aux adresses sur 20 bits dont :

    - les 6 bits de poids faible correspondent audit compteur de rang (cpt_rang) ;
    - les 10 bits de poids moyen correspondent audit compteur d'unités de capacité allouées selon la nouvelle structure (cpt_NCU) si ledit signal binaire de comparaison vaut 1 et audit compteur d'unités de capacité allouées selon la structure précédente (cpt_ACU) sinon ;
    - les 4 bits de poids fort correspondent audit compteur de trames (cpt_trame),

    ledit compteur de rang (cpt_rang) étant incrémenté à chaque élément de données ;
  - incrémentation desdits compteur d'unités de capacité allouées selon la nouvelle structure (cpt_NCU) et compteur d'unités de capacité allouées nouvelle structure (cpt_NCU) et compteur d'unités de capacité allouées selon la structure précédente (cpt_ACU).

L'invention concerne également les émetteurs capables de transmettre ce signal, ainsi que les récepteurs capables de le recevoir, en mettant en oeuvre une procédure symétrique de reconstruction. Elle concerne encore le signal selon la revendication 9.

D'autres caractéristiques et avantages de l'invention apparaitront à la lecture de la description suivante d'un mode de réalisation préférentiel de l'invention, donné à titre illustratif et non limitatif, et des dessins annexés dans lesquels :

- la figure 1, déjà commentée en préambule, présente un plan mémoire adapté pour un entrelacement sur 16 trames, dans le cas d'un signal DAB à 3 sous-canaux ;
- la figure 2, également commentée en préambule, illustre le problème du partitionnement de la mémoire, dans le cas où une technique visant à mettre en oeuvre instantanément la nouvelle configuration serait mise en oeuvre ;

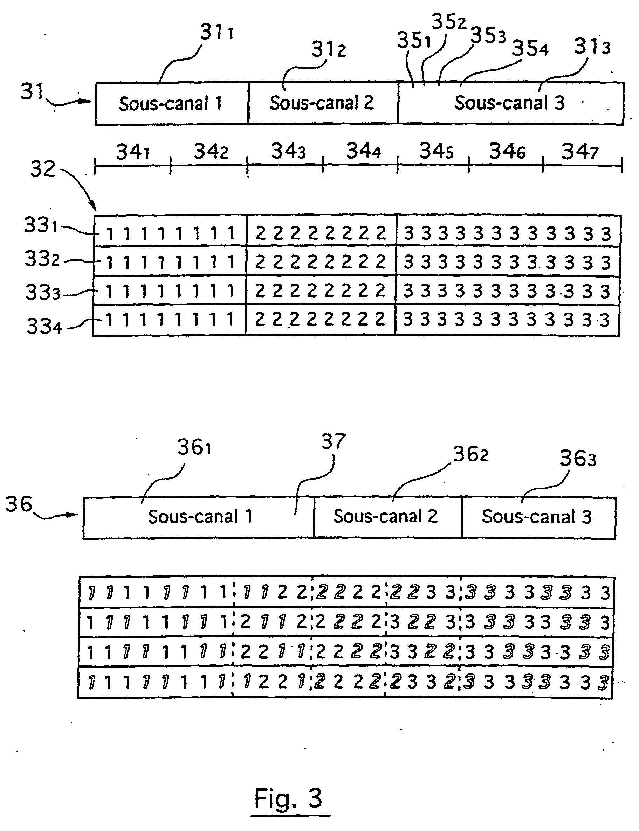

- la figure 3 illustre de façon générale l'inscription des éléments de données selon l'invention, dans le plan mémoire de la figure 2 ;
- la figure 4 présente la technique d'entrelacement mise en oeuvre pour chaque bloc de 16 éléments de données, dans le cas du DAB ;
- la figure 5 est un schéma synoptique décrivant les étapes d'écriture et de lecture selon l'invention, pendant le régime transitoire;
- la figure 6 illustre, de façon schématique, un récepteur mettant en oeuvre l'invention.

Le mode de réalisation préférentiel décrit par la suite correspond à la technique DAB telle qu'elle est actuellement normalisée. En régime normal, l'émission et la réception correspondant exactement à la norme. En revanche, le régime transitoire est modifié. on suit la structuration 31, constituée de 3 sous-canaux $31_1$ à $31_3$. Dans cet exemple, le plan mémoire 32 est composé de lignes $33_1$ à $33_4$ correspondant chacune (en régime normal) à une trame à émettre. Chaque trame comprend 7 unités de capacité $34_i$, comprenant chacune 4 éléments de données $35_1$ à $35_4$.

Classiquement, chaque zone mémoire correspondant à chaque sous-canal se voit affecter des éléments de données appartenant à ce sous-canal. Ainsi, le sous-canal $31_1$ reçoit les éléments de données repérés par "1", répartis sur deux unités de capacité. De même, respectivement, les sous-canaux $31_2$ et $31_3$ reçoivent les éléments de données "2" et "3".

En régime normal, il est clair que les unités de capacité sont homogènes..

A un instant donné, une nouvelle configuration 36, ou structuration, de la trame est définie, dans laquelle :

- le sous-canal $36_1$ est augmenté d'une unité de capacité 37 ;
- le second sous-canal $36_2$ est de taille inchangée, mais est décalé d'une unité de capacité ;
- le troisième sous-canal $36_3$ est diminué d'une unité de capacité.

A cet instant de nouvelle reconfiguration, le plan mémoire est déjà partiellement rempli, conformément, à la structuration précédente. Cela correspond, sur la figure, aux chiffres inscrits en caractères droits.

Dès le changement de configuration, l'inscription est faite selon la nouvelle structuration 36 (chiffres inscrits en italique).

Après 4 trames (4 correspondant donc ici à la profondeur de l'entrelacement), on atteint à nouveau un régime normal, avec des unités de capacité homogènes.

On comprend que les éléments de données inscrits dans les unités de capacité ayant changées d'affectation ne peuvent pas être homogènes durant la phase transitoite (voir par exemple l'unité de capacité 37). Il est à noter que des trames ainsi formées sont contraires à la norme DAB.

Ainsi, les trames du régime transitoire ne correspondent ni à la structure précédente ni à la structure courante. Il s'agit, pour chaque trame, d'une structure transitoire, que les récepteurs (ou au moins certains d'entre-eux) sont capables de déterminer, de façon symétrique.

On présente maintenant un exemple plus spécifique, correspondant au DAB.

Chaque sous-canal comprend un nombre entier de blocs de 64 bits donc a fortiori un nombre entier de bloc de 16 bits.

La loi d'entrelacement est définie modulo 16, donc par bloc de 16 bits également. Dans la mémoire d'entrelacement, on peut donc raisonner sur un bloc de 16 bits avec une profondeur de 16 trames. Le principe d'adressage écriture/lecture sera identique pour tous les blocs mémoire, quelque soit le canal considéré.

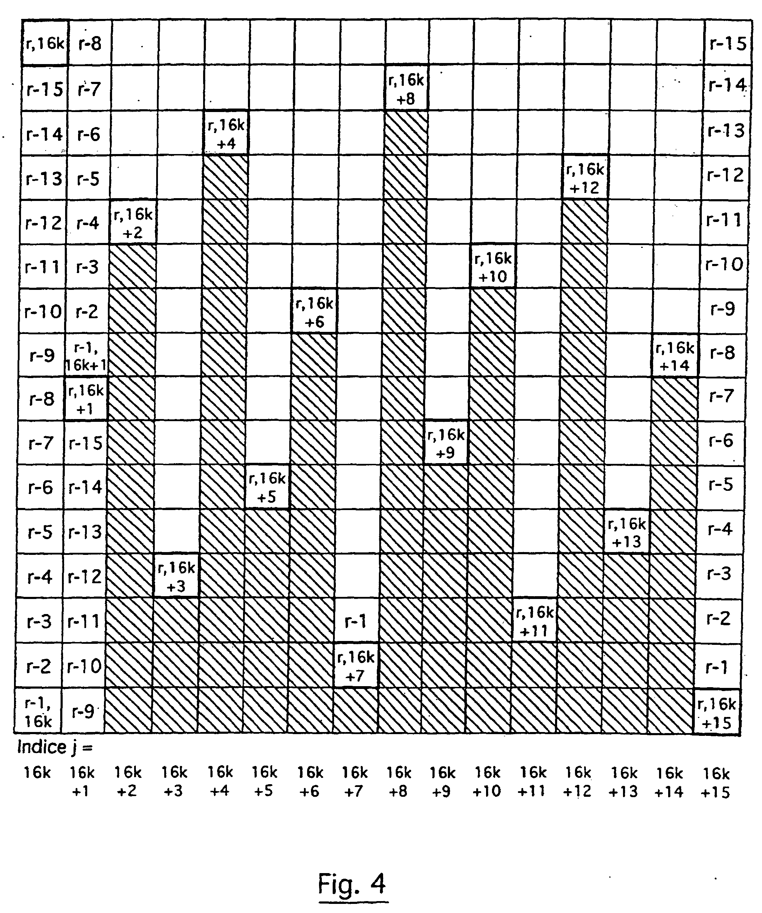

La figure 4 représente un bloc de 16 x 16 bits. Afin d'affecter les retards adéquats (voir table 1) à chacun des bits, on écrit les 16 bits colonne après colonne mais à une ligne dont la valeur dépend de la ligne courante et de la valeur de la colonne (ligne courante + "bit reverse" de la valeur de la colonne).

Par exemple, pour le 7ième bit, si la ligne courante est 0 (trame "r") on écrit à la colonne 7 et à la ligne

$$0 + \text{"bit reverse" de } 7$$

$$= 0 + 0111 \text{ (lu en sens inverse)}$$

$$= 0 + 1110$$

$$= 14$$

Dans la figure 4, les cases entourées désignent l'écriture des 16 bits de la trame de rang r.

Les bits de la trame de rang r + 1 seront écrits de la même façon, mais à la case immédiatement inférieure, et ainsi de suite pour r + 2, r + 3...

La lecture de la trame de rang r se fait colonne après colonne, sur la même ligne (ici la ligne 0).

La lecture de la trame de rang r + 1 se fera sur la ligne 1 et ainsi de suite.

L'écriture se fait toujours dans des cases libres (hachurées dans la figure).

En régime établi, les 16 x 16 bits du bloc appartiennent au même canal. On vient de voir que les bits d'une nouvelle trame sont écrits dans des cases définies par le rang de la trame et la position du bit (de 0 à 15).

Au moment d'un changement d'allocation des sons canaux dans la trame CIF, les bits d'un nouveau sous-canal sont écrits dans le même bloc de 16 x 16 bits. Toutefois, l'endroit des écritures ne dépendant pas du sous-canal, celle-ci se feront au même endroit que si le sous-canal n'avait pas changé, donc dans des cases libres. Pendant 15 trames, le bloc contiendra des bits des 2 sous-canaux, mais on voit qu'il n'y a pas eu "écrasement" des bits utiles.

Un aspect essentiel de l'invention est la logique spécifique de relecture. Pendant les 15 trames suivant le changement la relecture doit se faire dans les blocs correspondant aux CU nouvellement alloués pour les bits que l'on a écrit depuis le changement et dans les blocs correspondant aux CU anciennement allouées pour les bits qui étaient avant le changement. Les 6 bits de poids faible indiquant la position du bit dans la CU sont inchangés. Seuls, les 10 bits désignant la CU où il faut lire, sont concernés.

On voit que plus le nombre de trames passées depuis le changement est grand, plus on va lire des bits dans les blocs correspondant au CU nouvellement alloués.

Si on considère l'exemple de la figure 4, et que l'on se place sur la ligne de rang 4, on devra lire dans le bloc nouvellement alloué les bits de rang 0,2,4,8 et 12 sont le bit reverse est 0,4,2,1 et 3, donc dont le bit reverse du rang est inférieure ou égal au nombre de trames écoulées depuis le changement.

Un signal appelé "nouvelle trame" est donc généré simplement par comparaison de 2 blocs de 4 bits, l'un étant le nombre de trame écoulées depuis le changement, l'autre dont la représentation en bit reverse du rang modulo 16 du bit à lire.

Les 10 bits d'adresse de lecture de 15 à 6 seront affectés aux blocs nouvellement alloués lorsque le signal binaire "nouvelle trame" sera activé et aux blocs anciennement alloués dans le cas contraire.

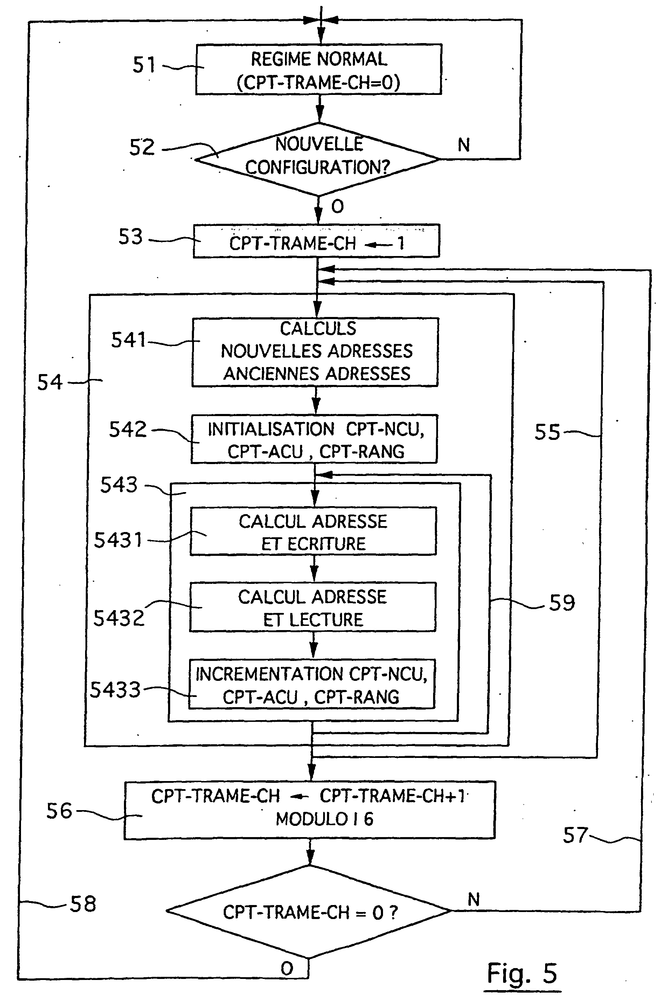

La figure 5 décrit l'organigramme du traitement en cas de changement de configuration du multiplex.

En régime normal 51 un compteur de trame à la valeur 0. Lorsqu'une commande de changement de configuration est détectée (52), le compteur de trame prend la valeur 1 (53), pour chacun des sous-canaux, on effectue (54) :

- le calcul 541 des adresses des blocs nouvellement et anciennement alloués dans le plan mémoire d'entrelacement ;
- l'initialisation 542 à zéro de trois compteurs :

    - l'initialisation 542 à zéro de trois compteurs :

        - cpt-NCU : compteur 10 bits noté cpt-NCU [9..0] qui compte les CU nouvellement alloués ;
        - cpt-ACU : compteur 10 bits noté cpt-ACU [9..0] qui compte les CU anciennement alloués ;
        - cpt-rang : compteur 6 bits noté cpt-rang [5..0] qui compte le rang du bit dans la CU ;

    - pour chaque élément de données (boucle 59) bit par exemple (543) :

        - 5431 : écriture dans la mémoire à l'adresse d'écriture décrite par :

                6 bits de poids faibles [5..0] = cpt-rang [5..0]
                10 bits de poids moyen [15..6] = cpt-NCU [9..0]
                4 bits de poids fort [19-16] = cpt-trame + cpt-rang [0..3]

        - 5432 : lecture dans la mémoire de lecture à l'adresse :

                6 bits de poids faible [5..0] = cpt-rang [5..0]
                10 bits de poids moyen [15..6] =
                    cpt-NCU [9..0] si nouvelle trame
                    cpt-ACU [9..0] sinon ;
                4 bits de poids fort = cpt-trame.

        - 5433 : incrémentation des compteurs cpt-rang, puis éventuellement cpt-NCU et Cpt-ACU ;

On reboucle (55) ainsi pour chaque sous-canal, puis on incrémente 56 le compteur de trame Cpt-trame-ch modulo 16. Si le Cpt_trame_ch est différent de 0, on répète (57) le traitement pour la nouvelle trame. Sinon, on est à nouveau (58) en régime normal.

S'il n'y a pas de changement, les valeurs cpt-NCU et cpt-ACU sont égales et le calcul des adresses écriture/ lecture dans la mémoire d'entrelacement restent valables.

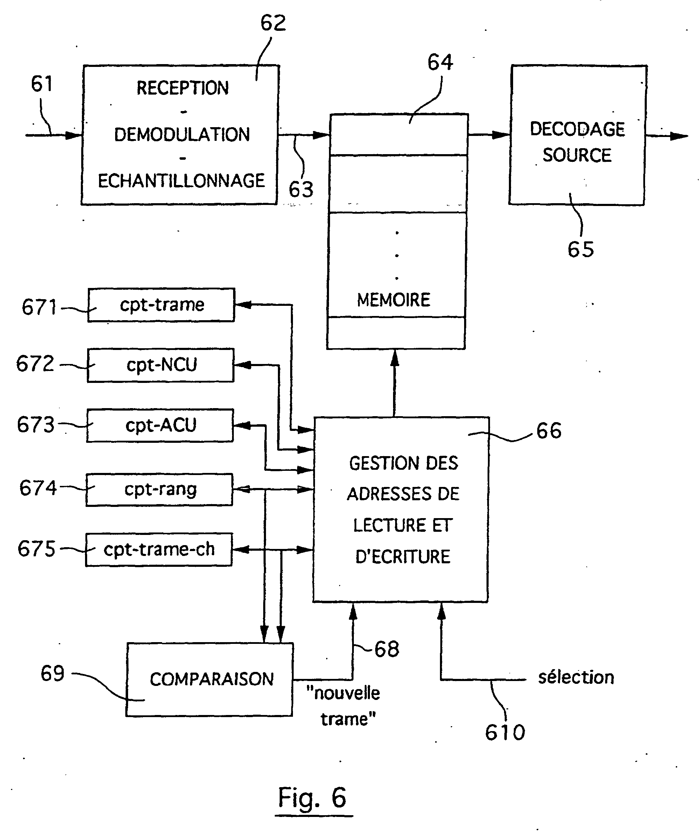

La figure 6 illustre de façon schématique un récepteur selon l'invention.

Le signal reçu 61 subit tout d'abord, d'une façon classique, dans un module générique de réception 62 les opérations de démodulation, filtrage, échantillonnage,etc... permettant de récupérer les éléments de données 63 formant chaque trame.Ces éléments de données sont écrits dans une mémoire 64 identique à celle mise en oeuvre à l'émission, puis relus pour être transmis à un module 65 de décodage source.

L'inscription et la lecture dans la mémoire 64 se font de façon symétrique à la technique miose en oeuvre à l'émission. Plus précisément, les opération sont identiques, à ceci près que l'on assure le désentrelacement des données entrelacées.

Un module 66 de gestion des adresses de lecture et d'écriture pilote donc la mémoire 64. Le procédé mis en oeuvre correspond pour l'essentiel à celui illustré en figure 5. Le module 66 exploite donc 5 compteurs :

- cpt-trame 671, utilisé pour calculer les bits de poids forts des adresses de lecture et d'écriture ;
- cpt-NCU 672, utilisé pour le calcul de l'adresse lorsque l'on doit considérer la nouvelle structure ;
- cpt-ACU 673, utilisé pour le calcul de l'adresse lorsque l'on doit considérer l'ancienne structure ;
- cpt-rang 674, utilisé pour calculer les bits de poids forts des adresses de lecture et d'écriture ;
- cpt-tram-ch 675, indiquant le nombre de trames depuis le changement de structure.

Le choix entre la nouvelle ou l'ancienne structure se fait toujours en fonction du signal binaire "nouvelle-trame" 68, résultat de la comparaison 69 entre cpt-trame-ch et les 4 premiers bits de cpt-rang.

L'opération de désentrelacement temporel qui est mise en oeuvre dans le récepteur est duale de l'opération d'entrelacement temporel.

La seule différence est le calcul des 4 bits de poids fort de l'adresse d'écriture.

- Récepteur : 4 bits de poids fort [19..16] = cpt-trame + (15-cpt-rang [0..3]) (désentrelacement) ;
- Emetteur : 4 bits fort [19..16] = cpt-trame + cpt-rang [0..3].

Les autres bits de l'adresse-écriture et l'adresse-lecture ont la même expression pour l'entrelacement et le désentrelacement.

Il est a noter que, en conséquence, la structure d'un émetteur peut être directement déduite de celle du récepteur de la figure 6.

En régime normal, (quand cpt-trame-ch vaut 0), le module 66 de gestion de l'adressage fonctionne de façon classique, conformément à la norme.

Le changement de structuration est signalé dans un canal spécial de la trame, que le module 66 analyse en permanence. Lorsqu'un changement est mentionné, ce module 66 fait passer le cpt-trame-ch à 1.

Une spécificité du récepteur est que, bien sûr, il n'est pas obligé de prendre en compte toutes les unités de capacité, mais seulement celles correspondant aux sous-canaux de l'application qu'il souhaite décoder. Cela permet de réduire fortement les traitements.

Pour cela, le module 66 prend en compte une information 610 de sélection, qui correspond par exemple au choix d'un utilisateur.

L'invention concerne donc le procédé de mise en oeuvre de la reconfiguration, ainsi que les émetteurs et les récepteurs capables de transmettre et recevoir les signaux ainsi produits.

Elle concerne également ces signaux, qui possèdent une construction tout à fait nouvelle et non évidente, en régime transitoire. En effet, chaque trame présente alors une structure spécifique et différente, qui ne correspond ni à la structure courante, ni à la structure précédente.

Ces structures transitoires sont déterminées par l'émetteur, à partir des structures précédente et courante, en fonction d'un logique connue du récepteur, de façon que celui-ci puisse reconstruire les signaux source.

## Revendications

1. Procédé de reconfiguration dynamique de la structure des trames d'un signal, dans un système de transmission assurant l'émission dudit signal sous la forme de trames successives, comprenant chacune un même nombre d'unités de capacité ($34_i$) constituées chacune d'un même nombre d'éléments de données ($35_1$-$35_4$),

    chacune desdites trames étant de plus structurée en au moins un sous-canal ($31_1$-$31_3$), chacun desdits sous-canaux correspondant à un signal source distinct et étant formé d'un nombre entier d'unités de capacité,

    le nombre, l'ordre et/ou le format desdits sous-canaux étant susceptible d'être modifié sous la commande d'une instruction de réallocation définissant une nouvelle structure (36) de trame,

    un entrelacement temporel sur N trames étant mis en oeuvre sélectivement pour chacun desdits sous-canaux, à l'aide d'un plan mémoire (32) formé de N lignes ($33_1$-$33_4$) correspondant chacune au contenu d'une trame et dans lequel, en régime normal (51), les éléments de données sont inscrits en fonction d'une loi d'entrelacement et relus ligne à ligne,

    **caractérisé en ce que**, en régime transitoire, les N trames suivant une instruction de réallocation sont formées chacune d'unités de capacités homogènes, formées d'éléments de données issus du même signal source, de la façon suivante :

    - la procédure d'inscription desdits éléments de données en fonction de ladite loi d'entrelacement est inchangée, en respectant la nouvelle structure définie par ladite instruction de réallocation ; et
    - une logique spécifique de relecture dudit plan mémoire est mise en oeuvre, comprenant, au moins pour les unités de capacité affectées à un nouveau sous canal ($36_1$-$36_3$) dans ladite nouvelle structure de trame, les étapes de :

        - lecture des éléments de données inscrits dans ledit plan mémoire avant ladite instruction de réallocation en fonction de l'organisation définie par la structure précédente ; et
        - lecture des éléments de données inscrits dans ledit plan mémoire après ladite instruction de réallocation en fonction de l'organisation définie par la nouvelle structure.

2. Procédé selon la revendication 1, **caractérisé en ce que** ladite logique de relecture génère un signal de contrôle permettant la sélection d'une adresse de lecture pour chaque élément de données, parmi une première adresse correspondant à la structure précédente et une seconde adresse correspondant à la nouvelle structure.

3. Procédé selon l'une quelconque des revendications 1 et 2, **caractérisé en ce que** lesdites unités de capacité sont constituées d'un nombre entier, supérieur ou égal à 1, de zones de données, chaque zone de données comprenant N éléments de données, et **en ce que** ledit entrelacement temporel est effectué indépendamment sur des blocs formés de N zones de données de N trames consécutives.

4. Procédé selon la revendication 3, **caractérisé en ce que** ledit entrelacement temporel consiste, pour chaque bloc formé de N lignes et de N colonnes, à calculer une adresse d'inscription dans ledit bloc à partir de l'adresse précédente en :

   - ajoutant 1 modulo N à l'adresse de colonne, pour déterminer la nouvelle adresse de colonne ; et
   - ajoutant l'adresse de colonne écrite selon la technique bit reverse à l'adresse de ligne modulo N, pour déterminer la nouvelle adresse de ligne.

5. Procédé selon les revendications 2 et 4, **caractérisé en ce que** ledit signal de contrôle est un signal binaire représentant, pour chaque zone de données, le résultat de la comparaison entre :

   - le nombre de trames transmises depuis la mise en oeuvre de la nouvelle structure de trame ; et
   - la représentation selon la technique bit reverse du rang modulo N de l'élément de données en cours dans ladite zone de données.

6. Procédé selon l'une quelconque des revendications 3 à 5, **caractérisé en ce que** N est égal à 16 et **en ce que** lesdits éléments de données sont binaires,
   **en ce que**, dans ledit régime transitoire, on gère cinq compteurs :

   - un compteur (671) de trame (cpt_trame) modulo 16 ;
   - un compteur (675) du nombre de trames écoulées depuis une instruction de reconfiguration (cpt_trame_ch), valant 0 en régime normal et comptant modulo 16 ;
   - un compteur (672) d'unités de capacité allouées selon la nouvelle structure, sur 10 bits (cpt_NCU) ;
   - un compteur (673) d'unités de capacité allouées selon la structure précédente, sur 10 bits (cpt_ACU) ;
   - un compteur (674) de rang de l'élément de donnée binaire dans l'unité de capacité, sur 6 bits (cpt_rang) ;

   et un signal binaire de comparaison (69) entre la valeur dudit compteur du nombre de trames écoulées depuis une instruction de reconfiguration (cpt_trame_ch) et des quatre bits de poids fort dudit compteur de rang (cpt_rang), lus selon la technique "bit reverse",
   et **en ce qu'**on effectue (54) pour chacun desdits sous-canaux des chacune des trames dudit régime transitoire les étapes suivantes :

   - calcul (541) des adresses des blocs dans ledit plan mémoire selon la structure précédente et selon la structure courante ;
   - initialisation (542) à 0 des compteurs cpt_NCU, cpt_ACU, cpt_rang ;
   - pour chaque sous-canal :

     - inscription (5431) dans la mémoire des éléments de données binaires à inscrire aux adresses sur 20 bits dont :

       - les 6 bits de poids faible correspondent audit compteur de rang (cpt_rang) ;
       - les 10 bits de poids moyen correspondent audit compteur d'unités de capacité allouées selon la nouvelle structure (cpt_NCU) ;
       - les 4 bits de poids fort correspondent à la sommation dudit compteur de trames (cpt_trame) et des 4 bits de poids faible dudit compteur de rang (cpt_rang) lus selon la technique "bit reverse",

       ledit compteur de rang (cpt_rang) étant incrémenté à chaque élément de données ;
     - lecture (5432) dans la mémoire des éléments de données binaires à lire aux adresses sur 20 bits dont :

       - les 6 bits de poids faible correspondent audit compteur de rang (cpt_rang) ;
       - les 10 bits de poids moyen correspondent audit compteur d'unités de capacité allouées selon la nouvelle structure (cpt_NCU) si ledit signal binaire de comparaison vaut 1 et audit compteur d'unités de capacité allouées selon la structure précédente (cpt_ACU) sinon ;

- les 4 bits de poids fort correspondent audit compteur de trames (cpt_trame),

ledit compteur de rang (cpt_rang) étant incrémenté à chaque élément de données ;
- incrémentation (5433) desdits compteur d'unités de capacité allouées selon la nouvelle structure (cpt_NCU) et compteur d'unités de capacité allouées selon la structure précédente (cpt_ACU).

**7.** Dispositif d'émission d'un signal, dans un système de transmission assurant l'émission dudit signal sous la forme de trames successives, comprenant chacune un même nombre d'unités de capacité ($34_i$) constituées chacune d'un même nombre d'éléments de données ($35_1$-$35_4$),
chacune desdites trames étant de plus structurée en au moins un sous-canal ($31_1$-$31_3$), chacun desdits sous-canaux correspondant à un signal source distinct et étant formé d'un nombre entier d'unités de capacité,
le nombre, l'ordre et/ou le format desdits sous-canaux étant susceptible d'être modifié sous la commande d'une instruction de réallocation définissant une nouvelle structure (36) de trame,
ledit dispositif comprenant des moyens d'entrelacement temporel sur N trames agissant sélectivement pour chacun desdits sous-canaux, à l'aide d'un plan mémoire (32) formé de N lignes ($33_1$-$33_4$) correspondant chacune au contenu d'une trame et dans lequel, en régime normal (51), les éléments de données sont inscrits en fonction d'une loi d'entrelacement et relus ligne à ligne,
**caractérisé en ce qu'**il comprend des moyens de réalisation spécifique de trames en régime transitoire, de façon que les N trames suivant une instruction de réallocation soient formées chacune d'unités de capacités homogènes, formées d'éléments de données issus du même signal source, en assurant :

- l'inscription desdits éléments de données en fonction de ladite loi d'entrelacement de façon inchangée, en respectant la nouvelle structure définie par ladite instruction de réallocation ; et
- la relecture spécifique dudit plan mémoire consistant, au moins pour les unités de capacité affectées à un nouveau sous-canal dans ladite nouvelle structure de trame, à :

- lire les éléments de données inscrits dans ledit plan mémoire avant ladite instruction de réallocation en fonction de l'organisation définie par la structure précédente ; et
- lire les éléments de données inscrits dans ledit plan mémoire après ladite instruction de réallocation en fonction de l'organisation définie par la nouvelle structure.

**8.** Récepteur d'un signal, dans un système de transmission assurant l'émission dudit signal sous la forme de trames successives, comprenant chacune un même nombre d'unités de capacité ($34_i$) constituées chacune d'un même nombre d'éléments de données ($35_1$-$35_4$),
chacune desdites trames étant de plus structurée en au moins un sous-canal ($31_1$-$31_3$), chacun desdits sous-canaux correspondant à un signal source distinct et étant formé d'un nombre entier d'unités de capacité,
le nombre, l'ordre et/ou le format desdits sous-canaux étant susceptible d'être modifié sous la commande d'une instruction de réallocation définissant une nouvelle structure (36) de trame,
ledit dispositif comprenant des moyens d'entrelacement temporel sur N trames agissant sélectivement pour chacun desdits sous-canaux, à l'aide d'un plan mémoire (32) formé de N lignes ($33_1$-$33_4$) correspondant chacune au contenu d'une trame et dans lequel, en régime normal (51), les éléments de données sont inscrits en fonction d'une loi d'entrelacement et relus ligne à ligne,
**caractérisé en ce qu'**il comprend des moyens de reconstruction spécifique de trames en régime transitoire, pour les N trames suivant une instruction de réallocation, formées chacune d'unités de capacités homogènes, formées d'éléments de données issus du même signal source, assurant :

- l'inscription desdits éléments de données en fonction de ladite loi d'entrelacement de façon inchangée, en respectant la nouvelle structure définie par ladite instruction de réallocation ; et
- la relecture spécifique dudit plan mémoire consistant, au moins pour les unités de capacité affectées à un nouveau sous-canal dans ladite nouvelle structure de trame, à :

- lire les éléments de données inscrits dans ledit plan mémoire avant ladite instruction de réallocation en fonction de l'organisation définie par la structure précédente ; et
- lire les éléments de données inscrits dans ledit plan mémoire après ladite instruction de réallocation en fonction de l'organisation définie par la nouvelle structure.

9. Signal destiné à être transmis vers au moins un récepteur et formé de trames successives, comprenant chacune un même nombre d'unités de capacité ($34_i$) constituées chacune d'un même nombre d'éléments de données ($35_1$-$35_4$),
chacune desdites trames étant de plus structurée en au moins un sous-canal ($31_1$-$31_3$), chacun desdits sous-canaux correspondant à un signal source distinct et étant formé d'un nombre entier d'unités de capacité,
le nombre, l'ordre et/ou le format desdits sous-canaux étant susceptible d'être modifié sous la commande d'une instruction de réallocation définissant une nouvelle structure (36) de trame,
lesdits éléments de données présentant un entrelacement temporel sur N trames défini sélectivement pour chacun desdits sous-canaux,
**caractérisé en ce que** les N trames suivant une instruction de réallocation, correspondant aux trames d'un régime transitoire, sont formées chacune d'unités de capacités homogènes, formées d'éléments de données issus du même signal source, obtenues par la mise en oeuvre :

- d'une procédure d'inscription desdits éléments de données en fonction de ladite loi d'entrelacement de façon inchangée, en respectant la nouvelle structure définie par ladite instruction de réallocation ; et
- d'une logique spécifique de relecture dudit plan mémoire, comprenant, au moins pour les unités de capacité affectées à un nouveau sous canal dans ladite nouvelle structure de trame, les étapes de :

  - lecture des éléments de données inscrits dans ledit plan mémoire avant ladite instruction de réallocation en fonction de l'organisation définie par la structure précédente ; et
  - lecture des éléments de données inscrits dans ledit plan mémoire après ladite instruction de réallocation en fonction de l'organisation définie par la nouvelle structure.

**Patentansprüche**

1. Verfahren zur dynamischen Rekonfiguration der Struktur der Teilbilder bzw. der Datenübertragungsblöcke eines Signals in einem Übertragungssystem, welches das Senden dieses Signals in Form von aufeinander folgenden Teilbildern bzw. Datenübertragungsblöcken sicherstellt, die jeweils die gleiche Anzahl von jeweils aus der gleichen Zahl von Datenelementen ($35_1$-$35_4$) gebildeten Kapazitätseinheiten ($34_i$) umfassen,
wobei jedes dieser Teilbilder bzw. jeder dieser Datenübertragungsblöcke außerdem in mindestens einem Unterkanal ($31_1$-$31_3$) angeordnet ist, wobei jeder dieser Unterkanäle einem verschiedenen Quellsignal entspricht und aus einer ganzen Zahl von Kapazitätseinheiten gebildet ist,
wobei die Zahl, die Reihenfolge und/oder das Format dieser Unterkanäle durch Erteilung eines Wiederzuordnungsbefehls, welcher eine neue Teilbild- bzw. Datenübertragungsblockstruktur (36) definiert, geändert werden kann,
wobei eine zeitliche Verschachtelung über N Teilbilder bzw. Datenübertragungsblöcke selektiv für jeden der Unterkanäle angewandt wird, mit Hilfe einer Datenspeicherebene (32), die aus N Zeilen ($33_1$-$33_4$) gebildet wird, die jeweils dem Inhalt eines Teilbildes bzw. Datenübertragungsblock entsprechen und wobei unter normalen Betriebsbedingungen (51) die Datenelemente als Funktion eines Verschachtelungsgesetzes in diese Datenspeicherebene eingetragen und Zeile für Zeile wieder gelesen werden,
**dadurch gekennzeichnet, dass** im Übergangszustand, die einem Wiederzuordnungsbefehl folgenden N Teilbilder bzw. Datenübertragungsblöcke jeweils aus Einheiten homogener Kapazität gebildet werden, die folgendermaßen aus von einem selben Quellsignal kommenden Datenelementen gebildet werden:

- das Eintragungsverfahren dieser Datenelemente als Funktion des Verschachtelungsgesetzes bleibt unverändert, wobei die neue, vom Wiederzuordnungsbefehl definierte Struktur aufrechterhalten wird und
- es wird eine spezifische Logik zum erneuten Lesen der Datenspeicherebene angewandt, welche, mindestens für die einem neuen Unterkanal ($36_1$-$36_3$) zugeordneten Kapazitätseinheiten in der neuen Teilbild- bzw. Datenübertragungsblockstruktur, die folgenden Schritte umfasst:

  - Lesen der in der Datenspeicherebene eingetragenen Datenelemente vor Erteilung des Wiederzuordnungsbefehls, als Funktion der von der vorhergehenden Struktur definierten Organisation und
  - Lesen der in der Datenspeicherebene eingetragenen Datenelemente nach Erteilung des Wiederzuordnungsbefehls, als Funktion der von der neuen Struktur definierten Organisation.

2. Verfahren nach Anspruch 1, **dadurch gekennzeichnet, dass** die Logik zum erneuten Lesen ein Steuersignal erzeugt, das die Wahl einer Leseadresse für jedes Datenelement unter einer ersten Adresse, die der vorhergehenden Struktur entspricht und einer zweiten Adresse, die der neuen Struktur entspricht, ermöglicht.

**3.** Verfahren nach einem der Ansprüche 1 oder 2, **dadurch gekennzeichnet, dass** die Kapazitätseinheiten aus einer gleichen Zahl, die gleich oder größer 1 ist, von Datenzonen gebildet werden, wobei jede Datenzone N Datenelemente umfasst, und dadurch, dass die zeitliche Verschachtelung in unabhängiger Weise über Blöcke erfolgt, die aus N Datenzonen von N aufeinander folgenden Teilbildern bzw. Datenübertragungsblöcken gebildet werden.

**4.** Verfahren nach Anspruch 3, **dadurch gekennzeichnet, dass** die zeitliche Verschachtelung für jeden aus N Zeilen und N Spalten gebildeten Block darin besteht, eine Eintragungsadresse in diesem Block ausgehend von der vorherigen Adresse zu berechnen, wobei:

- der Spaltenadresse 1 Modulo N hinzugefügt wird, um die neue Spaltenadresse festzustellen und
- der nach der Bit-Umkehr-Technik geschriebenen Spaltenadresse die Zeilenadresse Modulo N hinzugefügt wird, um die neue Zeilenadresse festzustellen.

**5.** Verfahren nach den Ansprüchen 2 und 4, **dadurch gekennzeichnet, dass** das Steuersignal ein Binärsignal ist, das für jede -Datenzone das Ergebnis des Vergleiches zwischen:

- der Zahl der seit dem Einsatz der neuen Teilbild- bzw. Datenübertragungsblockstruktur gesendeten Teilbilder bzw. Datenübertragungsblöcke und
- der Darstellung nach der Bit-Umkehr-Technik des Rangs Modulo N des in der Datenzone laufenden Datenelementes

darstellt.

**6.** Verfahren nach einem der Ansprüche 3 bis 5, **dadurch gekennzeichnet, dass** N gleich 16 ist und dass es sich bei den Datenelementen um Binärdaten handelt, dass in dem Übergangszustand fünf Zähler verwaltet werden:

- ein Zähler (671) für Teilbilder bzw. Datenübertragungsblöcke (cpt_trame) Modulo 16;
- ein Zähler (675) der Zahl der seit einer Rekonfigurationsanweisung (cpt_trame_ch) abgelaufenen Teilbilder bzw. Datenübertragungsblöcke, dessen Wert unter normalen Bedingungen 0 ist und Modulo 16 zählt;
- ein Zähler (672) von nach der neuen Struktur über 10 Bits zugeordnete Kapazitätseinheiten (cpt_NCU);
- ein Zähler (673) von nach der vorhergehenden Struktur über 10 Bits zugeordnete Kapazitätseinheiten (cpt_ACU);
- ein Rangzähler (674) des binären Datenelementes in der Kapazitätseinheit über 6 Bits (cpt_rang);

sowie ein binäres Vergleichssignal (69) zwischen dem Wert des Zählers für die Zahl der seit einer Rekonfigurationsanweisung (cpt_trame_ch) abgelaufenen Teilbilder bzw. Datenübertragungsblöcke und der vier höchstwertigen Bits des Rangzählers (cpt_rang), gelesen nach der "Bit-Umkehr" Technik und

dass für jeden der Unterkanäle eines jeden Teilbildes bzw. Datenübertragungsblocks des Übergangszustandes die folgenden Schritte ausgeführt werden (54):

- Berechnung (541) der Adressen der Blöcke in der Datenspeicherebene nach der vorhergehenden Struktur und nach der laufenden Struktur;
- Initialisierung (542) auf 0 der Zähler cpt_NCU, cpt_ACU, cpt_rang;
- für jeden Unterkanal:

  - Eintragen (5431) der binären Datenelemente in den Speicher, die über 20 Bits an die Adressen einzutragen sind, für welche:

    - die 6 niederwertigsten Bits dem Rangzähler (cpt_rang) entsprechen;
    - die 10 Bits mit mittlerer Wertigkeit dem Zähler für nach der neuen Struktur zugeordnete Kapazitätseinheiten (cpt_NCU) entsprechen;
    - die 4 höchstwertigen Bits der Summe des Teilbild- bzw. Datenübertragungsblockzählers (cpt_trame) und den 4 niederwertigsten Bits des Rangzählers (cpt_rang) entsprechen, gelesen nach der "Bit-Reverse" Technik,
      wobei der Rangzähler (cpt_rang) bei jedem Datenelement inkrementiert wird;

  - Lesen (5432) aus dem Speicher der binären Datenelemente, die über 20 Bits an die Adressen zu lesen sind, für welche:

- die 6 niederwertigsten Bits dem Rangzähler (cpt_rang) entsprechen;
- die 10 Bits mit mittlerer Wertigkeit dem Zähler für nach der neuen Struktur zugeordnete Kapazitätseinheiten (cpt_NCU) entsprechen, wenn das binäre Vergleichssignal 1 ist, und ansonsten dem Zähler für nach der vorhergehenden Struktur zugeordneten Kapazitätseinheiten (cpt_ACU) entsprechen;
- die 4 höchstwertigen Bits dem Teilbild- bzw. Datenübertragungsblockzähler (cpt_trame) entsprechen, wobei der Rangzähler (cpt_rang) bei jedem Datenelement inkrementiert wird;

  - Inkrementierung (5433) des Zählers für nach der neuen Struktur zugeordneten Kapazitätseinheiten (cpt_NCU) sowie des Zählers für nach der vorhergehenden Struktur zugeordneten Kapazitätseinheiten (cpt_ACU).

7. Sendevorrichtung eines Signals in einem Sendesystem, welches die Übertragung des Signals in der Form aufeinander folgender Teilbilder bzw. Datenübertragungsblöcke sicherstellt, wobei jedes Teilbild bzw. jeder Datenübertragungsblock die gleiche Zahl von Kapazitätseinheiten ($34_i$) umfasst, die jeweils von der gleichen Zahl an Datenelementen ($35_1$-$35_4$) gebildet werden,
wobei ferner jedes Teilbild bzw. jeder Datenübertragungsblock in mindestens einem Unterkanal ($31_1$-$31_3$) angeordnet ist, wobei jeder Unterkanal einem verschiedenen Quellsignal entspricht und aus einer ganzen Zahl von Kapazitätseinheiten gebildet wird,
wobei die Zahl, die Reihenfolge und/oder das Format dieser Unterkanäle aufgrund eines eine neue Teilbild- bzw. Datenübertragungsblockstruktur (36) definierenden Wiederzuordnungsbefehls geändert werden können,
wobei die Vorrichtung zeitliche Verschachtelungsmittel über N Teilbilder bzw. Datenübertragungsblöcke umfasst, die selektiv auf jeden der Unterkanäle wirken, mit Hilfe einer aus N Zeilen ($33_1$-$33_4$) gebildeten Datenspeicherebene (32), wobei jede dieser Zeilen dem Inhalt eines Teilbildes bzw. Datenübertragungsblocks entspricht und wobei unter normalen Betriebsbedingungen (51) die Datenelemente als Funktion eines Verschachtelungsgesetzes in die Datenspeicherebene eingetragen und Zeile für Zeile ausgelesen werden,
**dadurch gekennzeichnet, dass** sie in Übergangszuständen über spezifische Mittel zum Realisieren von Teilbildern bzw. Datenübertragungsblöcken verfügt, so dass die auf einen Wiederzuordnungsbefehl folgenden N Teilbilder bzw. Raster jeweils aus homogenen Kapazitätseinheiten gebildet werden, die selbst aus vom selben Quellsignal stammende Datenelemente gebildet werden, wobei folgendes sichergestellt wird:

- das unveränderte Eintragen der Datenelemente als Funktion des Verschachtelungsgesetzes unter Einhaltung der von dem Wiederzuordnungsbefehl definierten neuen Struktur und
- das spezifische Auslesen der Datenspeicherebene, das zumindest für die einem neuen Unterkanal in der neuen Teilbild- bzw. Datenübertragungsblockstruktur zugeordneten Kapazitätseinheiten darin besteht, dass:

  - die vor dem Wiederzuordnungsbefehl als Funktion der in der durch die vorhergehenden Struktur definierten Organisation in die Datenspeicherebene eingetragenen Datenelemente gelesen werden und
  - die nach dem Wiederzuordnungsbefehl als Funktion der in der durch die neue Struktur definierten Organisation in die Datenspeicherebene eingetragenen Datenelemente gelesen werden.

8. Sendevorrichtung eines Signals in einem Sendesystem, welches die Übertragung des Signals in der Form aufeinander folgender Teilbilder bzw. Datenübertragungsblöcke sicherstellt, wobei jedes Teilbild bzw. jeder Datenübertragungsblock die gleiche Zahl von Kapazitätseinheiten ($34_i$) umfasst, die jeweils von der gleichen Zahl an Datenelementen ($35_1$-$35_4$) gebildet werden,
wobei ferner jedes Teilbild bzw. jeder Datenübertragungsblock in mindestens einem Unterkanal ($31_1$-$31_3$) angeordnet ist, wobei jeder Unterkanal einem verschiedenen Quellsignal entspricht und aus einer ganzen Zahl von Kapazitätseinheiten gebildet wird,
wobei die Zahl, die Reihenfolge und/oder das Format dieser Unterkanäle aufgrund eines eine neue Teilbild- bzw. Datenübertragungsblockstruktur (36) definierenden Wiederzuordnungsbefehls geändert werden können,
wobei die Vorrichtung zeitliche Verschachtelungsmittel über N Teilbilder bzw. Datenübertragungsblöcke umfasst, die selektiv auf jeden der Unterkanäle wirken, mit Hilfe einer aus N Zeilen ($33_1$-$33_4$) gebildeten Datenspeicherebene (32), wobei jede dieser Zeilen dem Inhalt eines Teilbildes bzw. Datenübertragungsblocks entspricht und wobei unter normalen Betriebsbedingungen (51) die Datenelemente als Funktion eines Verschachtelungsgesetzes in die Datenspeicherebene eingetragen und Zeile für Zeile ausgelesen werden,
**dadurch gekennzeichnet, dass** sie in Übergangszuständen über spezifische Mittel zum Wiederherstellen von Teilbildern bzw. Datenübertragungsblöcken verfügt, für die auf ein Wiederzuordnungsbefehl folgenden N Teilbilder bzw. Datenübertragungsblöcke, welche jeweils aus homogenen Kapazitätseinheiten gebildet werden, die selbst aus vom selben Quellsignal stammenden Datenelementen gebildet werden, wobei folgendes sichergestellt wird:

- das unveränderte Eintragen der Datenelemente als Funktion des Verschachtelungsgesetzes unter Einhaltung der von dem Wiederzuordnungsbefehl definierten neuen Struktur und
- das spezifische Auslesen der Datenspeicherebene, das zumindest für die einem neuen Unterkanal in der neuen Teilbild- bzw. Datenübertragungsblockstruktur zugeordneten Kapazitätseinheiten darin besteht, dass:

    - die vor dem Wiederzuordnungsbefehl als Funktion der in der durch die vorhergehenden Struktur definierten Organisation in die Datenspeicherebene eingetragenen Datenelemente gelesen werden und
    - die nach dem Wiederzuordnungsbefehl als Funktion der in der durch die neue Struktur definierten Organisation in die Datenspeicherebene eingetragenen Datenelemente gelesen werden.

9. Signal, das zu mindestens einem Empfänger gesendet werden soll und aus aufeinander folgenden Teilbildern bzw. Datenübertragungsblöcken besteht, die jeweils die gleiche Zahl von Kapazitätseinheiten ($34_i$) umfassen, von denen jede aus der gleichen Zahl von Datenelementen ($35_1$-$35_4$) gebildet werden, wobei ein jeder dieser Unterkanäle ($31_1$-$31_3$) einem anderen Quellsignal entspricht und aus einer ganzen Zahl von Kapazitätseinheiten gebildet wird,
wobei die Zahl, die Reihenfolge und/oder das Format dieser Unterkanäle aufgrund eines eine neue Teilbild- bzw. Datenübertragungsblockstruktur (36) definierenden Wiederzuordnungsbefehls geändert werden können,
wobei die Datenelemente eine zeitliche Verschachtelung über N Teilbilder bzw. Datenübertragungsblöcke aufweisen, die selektiv für jeden der Unterkanäle definiert wird,
**dadurch gekennzeichnet, dass** die einem Wiederzuordnungsbefehl folgenden N Teilbilder bzw. Datenübertragungsblöcke, welche den Teilbildern bzw. Datenübertragungsblöcken eines Übergangszustandes entsprechen, jeweils aus homogenen Kapazitätseinheiten gebildet werden, die selbst aus von dem selben Quellsignal stammende Datenelementen gebildet und durch Implementation erhalten werden:

- eines Eintragungsverfahren der Datenelemente als Funktion des Verschachtelungsgesetzes ohne Veränderungen unter Einhaltung der neuen, von dem Wiederzuordnungsbefehl definierten Struktur und
- eine spezifische Logik zum Auslesen der Datenspeicherebene, die mindestens für die einem neuen Unterkanal in der neuen Teilbild- bzw. Datenübertragungsblockstruktur zugeordneten, betroffenen Kapazitätseinheiten die folgenden Schritte umfasst:

    - Lesen der in der Datenspeicherebene vor dem Wiederzuordnungsbefehl als Funktion der durch die vorhergehende Struktur definierten Organisation eingetragenen Datenelemente und
    - Lesen der in der Datenspeicherebene nach dem Wiederzuordnungsbefehl als Funktion der durch die neue Struktur definierten Organisation eingetragenen Datenelemente.

**Claims**

1. Process for the dynamic reconfiguration of the structure of the frames of a signal in a transmission system providing for the transmission of said signal in the form of successive frames, each comprising the same number of capacity units ($34_1$), each constituted by the same number of data bits ($35_1$-$35_4$),
each of said frames being furthermore structured in at least one sub-channel ($31_1$-$31_3$), each of said sub-channels corresponding to a separate signal source and being formed from a whole number of capacity units,
the number, order and/or format of said sub-channels being capable of being modified under the control of a reallocation instruction defining a new frame structure (36),
a time interlacing on N frames being selectively implemented for each of said sub-channels, by means of a memory array (32) formed from N rows ($33_1$-$33_4$), each corresponding to the contents of a frame, and in which, in a normal state (51), the data bits are written according to an interlacing law and re-read row by row,
**characterised in that**, in a transient state, according to a reallocation instruction the N frames are each formed from homogenous capacity units formed from data bits coming from the same signal source, in the following manner:

- the procedure for writing said data bits according to said interlacing law is unchanged, in keeping with the new structure defined by said reallocation instruction; and
- a specific logic for the re-reading of said memory array is implemented comprising, at least for the capacity units assigned to a new sub-channel ($36_1$-$36_3$) in said new frame structure, the steps of:

    - reading the data bits written in said memory array before said reallocation instruction according to the organisation defined by the previous structure; and
- reading the data bits written in said memory array after said reallocation instruction according to the organisation defined by the new structure.

2. Process according to Claim 1, **characterised in that** said re-reading logic generates a control signal enabling the selection of a read address for each data bit, from a first address corresponding to the preceding structure and a second address corresponding to the new structure.

3. Process according to any one of Claims 1 and 2, **characterised in that** said capacity units are constituted by a whole number, greater than or equal to 1, of data zones, each data zone comprising N data bits, and **in that** said time interlacing is effected independently on blocks formed from N zones of data bits of N consecutive frames.

4. Process according to Claim 3, **characterised in that** said time interlacing consists, for each block formed from N rows and N columns, in calculating a write address in said block from the preceding address, by:

- adding 1 modulo N to the column address to determine the new column address; and
- adding the column address written according to the reverse bit technique to the modulo N row address to determine the new row address.

5. Process according to Claims 2 and 4, **characterised in that** said control signal is a binary signal representing, for each data zone, the result of the comparison between:

- the number of frames transmitted since the implementation of the new frame structure; and
- the representation according to the reverse bit technique of the modulo N position of the current data bit in said data zone.

6. Process according to any one of Claims 3 to 5, **characterised in that** N is equal to 16 and **in that** said data bits are binary, and
**in that**, in said transient state, five counters are managed:

- a modulo 16 frame counter (671)(cpt_frame);
- a counter (675) of the number of frames that have elapsed since a reconfiguration instruction (cpt_frame_ch), equal to 0 in a normal state and counting modulo 16;
- a counter (672) of capacity units allocated according to the new structure, on 10 bits (cpt_NCU);
- a counter (673) of capacity units allocated according to the preceding structure, on 10 bits (cpt_ACU);
- a counter (674) of the position of the binary data bit in the capacity unit, on 6 bits (cpt_bit position); and

a binary comparison signal (69) between the value of said counter of the number of frames that have elapsed since a configuration instruction (cpt_frame_ch) and the four most significant bits of said bit position counter (cpt_bit position), read according to the "reverse bit" technique, and **in that** for each of said sub-channels of each of the frames of said transient state, the following steps are performed (54):

- the calculation (541) of the addresses of the blocks in said memory array according to the preceding structure and according to the current structure;
- the resetting to zero (542) of the counters cpt_NCU, cpt_ACU, cpt_bit position;
- for each sub-channel:

- the writing (5431) in the memory of the binary data bits to be written to the addresses on 20 bits, of which:

- the 6 least significant bits correspond to said bit position counter (cpt_bit position);
- the 10 bits of medium significance correspond to the counter of capacity units allocated according to the new structure (cpt_NCU) ;
- the 4 most significant bits correspond to the summation of said frame counter (cpt_frame) and the 4 least significant bits of said bit position counter (cpt_bit position) read according to the "reverse bit" technique,

said bit position counter (cpt_bit position) being incremented at each data bit;
- the reading (5432) into the memory of the binary data bits to be read at the addresses on 20 bits of which:

- the 6 least significant bits correspond to said bit position counter (cpt_bit position);
- the 10 bits of medium significance correspond to said counter of capacity units allocated according to the new structure (cpt_NCU) if said binary comparison signal is equal to 1 and, if not, to said counter of capacity units allocated according to the preceding structure (cpt)_ACU);
- the 4 most significant bits correspond to said frame counter (cpt_frame),

   said bit position counter (cpt_bit position) being incremented at each data bit;
- the incrementation (5433) of said counter of capacity units allocated according to the new structure (cpt_NCU) and counter of capacity units allocated according to the preceding structure (cpt_ACU).

7. Device for the transmission of a signal in a transmission system providing for the transmission of said signal in the form of successive frames, each comprising the same number of capacity units ($34_1$), each constituted by the same number of data bits ($35_1$-$35_4$),
   each of said frames being furthermore structured in a least one sub-channel ($31_1$-$31_3$), each of said sub-channels corresponding to a separate source signal and being formed from a whole number of capacity units,
   the number, order and/or format of said sub-channels- being capable of being modified under the control of a reallocation instruction defining a new frame structure (36),
   said device comprising means for time interlacing on N frames selectively implemented for each of said sub-channels, by means of a memory array (32) formed from N rows ($33_1$-$33_4$), each corresponding to the contents of a frame, and in which, in a normal state (51), the data bits are written according to an interlacing law and re-read row by row,
   **characterised in that** it comprises means for specific realisation of frames in a transient state, so that, according to a reallocation instruction, the N frames are each formed from homogenous capacity units formed from data bits coming from the same signal source, by providing for:

   - the writing of said data bits according to said interlacing law in an unchanged manner, in keeping with the new structure defined by said reallocation instruction; and
   - the specific re-reading of said memory array consisting, at least for the capacity units assigned to a new sub-channel in said new frame structure, in:

   - reading the data bits written in said memory array before said reallocation instruction according to the organisation defined by the previous structure; and
   - reading the data bits written in said memory array after said reallocation instruction according to the organisation defined by the new structure.

8. Receiver of a signal, in a system providing for the transmission of said signal in the form of successive frames each comprising the same number of capacity units ($34_1$), each constituted by the same number of data bits ($35_1$-$35_4$),
   each of said frames being furthermore structured in at least one sub-channel ($31_1$-$31_3$), each of said sub-channels corresponding to a separate signal source and being formed from a whole number of capacity units,
   the number, order and/or format of said sub-channels being capable of being modified under the control of a reallocation instruction defining a new frame structure (36) ,
   said device comprising means for time interlacing on N frames selectively implemented for each of said sub-channels, by means of a memory array (32) formed from N rows ($33_1$-$33_4$), each corresponding to the contents of a frame, and in which, in a normal state (51), the data bits are written according to an interlacing law and re-read row by row,
   **characterised in that** it comprises means for specific reconstruction of frames in a transient state, according to a reallocation instruction, for the N frames, each formed from homogenous capacity units formed from data bits coming from the same signal source, providing for:

   - the writing of said data bits according to said interlacing law in an unchanged manner, in keeping with the new structure defined by said reallocation instruction; and
   - the specific re-reading of said memory array consisting, at least for the capacity units assigned to a new sub-channel in said new frame structure, in:

   - reading the data bits written in said memory array before said reallocation instruction according to the organisation defined by the previous structure; and
   - reading the data bits written in said memory array after said reallocation instruction according to the organisation defined by the new structure.

9. Signal designed to be transmitted to at least one receiver and formed from successive frames, each comprising the same number of capacity units ($34_1$), each constituted by the same number of data bits ($35_1$-$35_4$), being furthermore structured in at least one sub-channel ($31_1$-$31_3$), each of said sub-channels corresponding to a separate signal source and being formed from a whole number of capacity units,

the number, order and/or format of said sub-channels being capable of being modified under the control of a reallocation instruction defining a new frame structure (36),

said data bits having a time interlacing on N frames selectively defined for each of said sub-channels,

**characterised in that**, in a transient state, according to a reallocation instruction the N frames are each formed from homogenous capacity units formed from data bits coming from the same signal source, obtained by implementing:

- a procedure for writing said data bits according to said interlacing law in an unchanged manner, in keeping with the new structure defined by said reallocation instruction; and
- a specific logic for re-reading said memory array comprising, at least for the capacity units assigned to a new sub-channel in said new frame structure, the steps of:

- reading the data bits written in said memory array before said reallocation instruction according to the organisation defined by the previous structure; and
- reading the data bits written in said memory array after said reallocation instruction according to the organisation defined by the new structure.

Fig. 1

Fig. 2

Fig. 3

| r,16k | r-8 | | | | | | | r,16k+8 | | | | | | | | r-15 |
| r-15 | r-7 | | | | | | | | | | | | | | | r-14 |
| r-14 | r-6 | | r,16k+4 | | | | | | | | | r,16k+12 | | | | r-13 |
| r-13 | r-5 | | | | | | | | | | | | | | | r-12 |
| r-12 | r-4 | r,16k+2 | | | | | | | | | | | | | | r-11 |
| r-11 | r-3 | | | | | | | | | r,16k+10 | | | | | | r-10 |
| r-10 | r-2 | | | | | r,16k+6 | | | | | | | | | | r-9 |
| r-9 | r-1,16k+1 | | | | | | | | | | | | | | r,16k+14 | r-8 |
| r-8 | r,16k+1 | | | | | | | | | | | | | | | r-7 |
| r-7 | r-15 | | | | | | | | r,16k+9 | | | | | | | r-6 |
| r-6 | r-14 | | | | r,16k+5 | | | | | | | | | | | r-5 |
| r-5 | r-13 | | | | | | | | | | | | r,16k+13 | | | r-4 |
| r-4 | r-12 | | r,16k+3 | | | | | | | | | | | | | r-3 |
| r-3 | r-11 | | | | | | r-1 | | | | r,16k+11 | | | | | r-2 |
| r-2 | r-10 | | | | | | r,16k+7 | | | | | | | | | r-1 |
| r-1,16k | r-9 | | | | | | | | | | | | | | | r,16k+15 |

Indice j =

| 16k | 16k+1 | 16k+2 | 16k+3 | 16k+4 | 16k+5 | 16k+6 | 16k+7 | 16k+8 | 16k+9 | 16k+10 | 16k+11 | 16k+12 | 16k+13 | 16k+14 | 16k+15 |

## Fig. 4

51 — REGIME NORMAL
(CPT-TRAME-CH=0)

52 — NOUVELLE
CONFIGURATION?     N

O

53 — CPT-TRAME-CH ← 1

54 —

541 — CALCULS
NOUVELLES ADRESSES
ANCIENNES ADRESSES

542 — INITIALISATION CPT-NCU,
CPT-ACU , CPT-RANG

55 —

543 —

5431 — CALCUL ADRESSE
ET ECRITURE

5432 — CALCUL ADRESSE
ET LECTURE

59 —

5433 — INCREMENTATION CPT-NCU,
CPT-ACU , CPT-RANG

56 — CPT-TRAME-CH ← CPT-TRAME-CH+1
MODULO I 6

57 —

58 — CPT-TRAME-CH = 0 ?     N

O

Fig. 5

23

Fig. 6